**Europäisches Patentamt**

**European Patent Office**

**Office européen des brevets**

(19)

(11) Veröffentlichungsnummer: **0 224 528
B1**

(12) **EUROPÄISCHE PATENTSCHRIFT**

(45) Veröffentlichungstag der Patentschrift: **27.12.90**

(21) Anmeldenummer: **86903367.0**

(22) Anmeldetag: **06.06.86**

(86) Internationale Anmeldenummer:
**PCT/EP86/00340**

(87) Internationale Veröffentlichungsnummer:
**WO 86/07516 18.12.86 Gazette 86/27**

(51) Int. Cl.⁵: **H 04 N 5/94, H 04 N 5/91**

(54) **SCHALTUNG ZUR VERMINDERUNG DES RAUSCHENS BEI DER WIEDERGABE VON VIDEOSIGNALEN.**

(30) Priorität: **10.06.85 DE 3520722**

(43) Veröffentlichungstag der Anmeldung:
**10.06.87 Patentblatt 87/24**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**EP-A-0 110 375
DE-A-3 239 423
FR-A-2 540 697
US-A-4 291 330
US-A-4 302 768**

**See also references of WO8607516**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **KLUTH, Hans-Jörgen
Weichselstrasse 11
D-7730 Villingen-Schwenningen (DE)**

Courier Press, Leamington Spa, England.

EP 0 224 528 B1

**Beschreibung**

Die Erfindung betrifft eine Schaltung nach dem Oberbegriff des Anspruchs 1.

Es ist bekannt, daß unter bestimmten Voraussetzungen Videosignale unter Rauchstörungen leiden. Bei Heimvideorecordern wird beispielsweise sparsam mit Magnetbandverbrauch pro Zeiteinheit umgegangen. Dies hat zur Folge, daß die ausgezeichneten Spuren sehr schmal sind und daß diese Spuren außerdem ohne den sogenannten Rasen, d.h. ohne Zwischenraum, geschrieben werden. Hierdurch ergeben sich im wesentlichen die beiden folgenden Probleme:

Erstes Problem:

Bei Verwendung von schlechtem Bandmaterial mit ungleichmäßiger Beschichtung, mit zu grober Partikelgröße und mit schlechter Verbindung von Trägerfolie und Magnetschicht (bekannt als "Schmierbänder") ergeben sich sogenannte Dropoutstörungen durch den "Zusammenbruch" des FM-Signals bei der Abtastung des Magnetbandes durch die Videoköpfe. Die genannten Fehler bewirken nämlich schlechten Band/Kopf-Kontakt oder Zuschmieren des Kopfspaltes. Je nach Art des verwendeten FM-Demodulators ergeben sich bei "Dropouts" auf dem Bildschirm weiße oder schwarze Störstreifen, die unangenehm sind.

Es ist bekannt, an die Stelle dieser Störungen ein Ersatzsignal einzutasten, das aus einer Zeit vor der Störung stammt und praktisch in einer Wiederholung des vor der Störung vorhandenen Signals besteht. Hierzu wird meist eine Ultraschallverzögerungsleitung mit einer Verzögerung von einer Zeilenlängendauer (64 µs) benutzt, da die Dauer der meisten "Dropouts" zwischen 5 und 25 µs Länge liegt. Beim Auftreten von Dropouts wird also das Signal der vorhergehenden Zeile an dieser Stelle eingetastet. Da zwei benachbarte Zeilen meist gleichen Signalinhalt aufweisen, also eine sogenannte Zeilenkorrelation vorliegt, ist diese Maßnahme zulässig und weniger störend als beispielsweise die ebenfalls bekannte Eintastung eines "Grauwertes" anstelle des gestörten Originalsignals. Sollte die Dropoutstörung länger als 64 µs dauern, wird das Ersatzsignal aus der Verzögerungsleitung immer wieder vom Ausgang zum Eingang zurückgeführt und solange zyklisch wiederholt, bis die Störung vorüber ist.

Zweites Problem:

Das rasenlose Schreiben der Videospuren hat bei der Wiedergabe zwangsläufig ein Übersprechen der Videosignale von Spur zu Spur zur Folge, da die Videoköpfe trotz Spurnachführung hin und wieder über einen Teil der jeweiligen Nachbarspur fahren. Trotz des zur Abhilfe in den heute üblichen Recordern genutzten Unterschiedes der Azimutwinkel (ca.+6° bei VHS) der Videoköpfe ergeben sich durch das Übersprechen Störungen, die den Signal/Rausch-Abstand verschlechtern und ein sogenanntes Kantenrauschen (Edge-Noise) an senkrechten Bildsignalkanten hervorrufen oder verstärken. Hierzu kommen bei Hifi-Ton-Recordern, bei denen die beiden FM-Tonträger bei ca. 1,6 MHz und 1,8 MHz liegen und direkt unter den Videospuren mit ±35° Azimuth aufgezeichnet sind, Übersprechprobleme aus diesen Tonbereichen auf die Video-FM und damit weitere Signalkantenstörungen im Videobereich.

Durch die DE—A—32 39 423 ist auch eine Schaltung bekannt, bei der zur Verringerung des Rauschens bei der Wiedergabe eines durch Frequenzmodulation eines Bildträgers aufgezeichneten Videosignals der Bildträger einem ersten Demodulator und über eine Zeilenverzögerungsleitung einem zweiten Demodulator zugeführt wird und die Ausgangsspannungen der beiden Demodulatoren an Eingänge einer Addierstufe angelegt sind, deren Ausgangsspannung als Videosignal für die Wiedergabe verwendet wird.

Bei einer solchen Schaltung kommt es durch die Überlagerung der Signale aus zwei zeitlich aufeinanderfolgenden Zeilen und somit bei der Bildwiedergabe zu einer Mittelung über zwei Zeilen. Eine derartige Mittelung bewirkt bei bestimmten Bildinhalten eine Verschlechterung der Bildwiedergabe. Diese Verschlechterung tritt insbesondere bei einem Gittermuster aus waagerechten und senkrechten weißen Linien auf, weil dann z.B. eine Zeile aus einer schwarzen Zeile und einer weißen Zeile gemittelt und mit einem Grauwert dargestellt wird, den es im Bild an sich nicht gibt.

Der Erfindung liegt die Aufgabe zugrunde, die zuletzt beschriebene Schaltung derart weiterzubilden, daß derartige Verfälschungen bei der Bildwiedergabe durch eine Mittelung über zwei Zeilen nicht auftreten.

Diese Aufgabe wird durch die im Anspruch 1 angegebene Erfindung gelöst. Vorteilhafte Weiterbildungen der Erfindung sind in den Unteransprüchen angegeben.

Zur näheren Erläuterung der Erfindung wird im folgenden ein Ausführungsbeispiel anhand der Zeichnungen beschrieben. Diese zeigen in

Fig. 1 das Blockschaltbild eines VHS-Videorecorders

Fig. 2a—2d Signale aus Fig. 1.

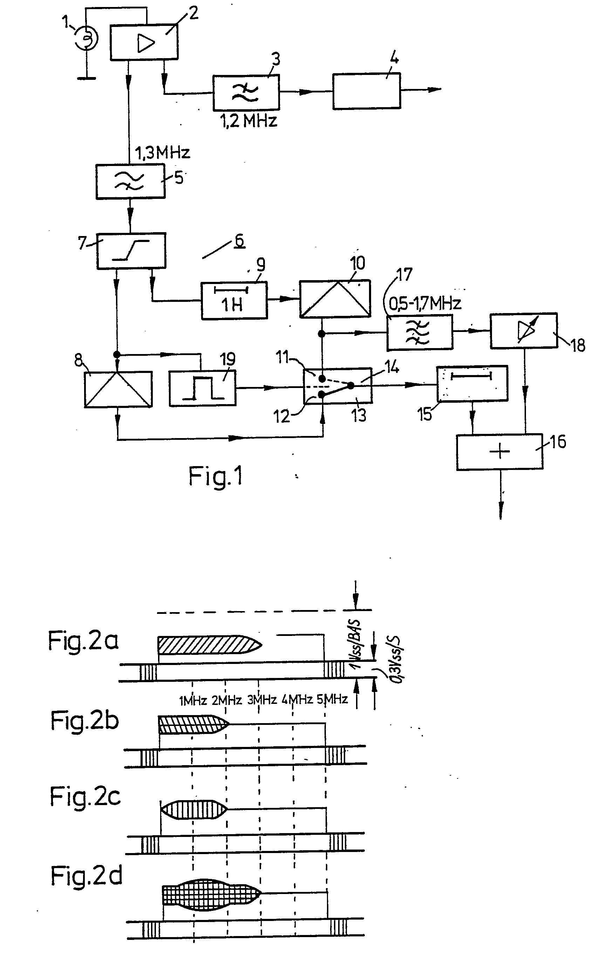

In Fig. 1 werden Ausgangssignale von Videoköpfen 1 einem Kopfverstärker 2 zugeführt. Der Ausgang des Kopfverstärkers 2 ist einerseits über ein Tiefpaßfilter 3 mit dem Farbweg 4 verbunden und andererseits über ein Hochpaßfilter 5 mit dem Luminanzweg 6. Das Tiefpaßfilter 3 läßt alle Frequenzen bis 1,2 MHz passieren. Das Hochpaßfilter 5 läßt alle Frequenzen über 1,3 MHz passieren. Zur Begrenzung der frequenzmodulierten Luminanzsignale ist ein Begrenzer 7 vorgesehen. Sein Ausgang ist einerseits mit einem ersten Frequenzdemodulator 8 und andererseits über eine Laufzeitleitung 9 von einer Zeilendauer mit einem zweiten Frequenzdemodulator 10 verbunden. Die Ausgänge beider Demodulatoren 8, 10 sind mit Klemmen 11, 12 eines Umschalters 13 verbunden, dessen Ausgangsklemme 14 über eine Laufzeitausgleichsschaltung 15 mit dem Eingang einer Addierstufe 16 verbunden ist. Der Ausgang des zweiten Frequenzdemodulators 10 ist zusätzlich über einen Bandpaß 17 und einen Amplitudenregler 18, z.B. einen Verstärker mit einstellbarer Ausgangsspannung, mit einem weiteren Eingang der Addierstufe 16 verbunden. Das Ausgangssignal der Addierstufe 16 ist das Y- oder Luminanzsignal. Das Ausgangssignal des Begrenzers 7 wird einer Fehler-Erkennungsschaltung 19, einem sogenannten Drop-out-Detektor zugeführt. Dieser steuert den Umschalter 13 so, daß bei gestörtem Luminanzsignal der Demodulator 10 wirksam ist.

In Fig. 2a ist ein Videosweepsignal dargestellt, das am Ausgang des FM-Demodulators 8 zur Verfügung steht, z.B. als Luminanzsignal Y eines VHS-Videorecorders. Dargestellt ist nur der nach Demodulation übrigbleibende Teil der ursprünglich 100 kHz bis 5 MHz betragenden Bandbreite.

Fig. 2b zeigt das Ausgangssignal des im Falle eines Drop-out wirksamen FM-Demodulators 10. Es ist in der Bandbreite deutlich reduziert durch die FM-Bandbebrenzung in der 1-H-Ultraschalldelayline oder einer 1-H-CCD-Verzögerungsleitung oder einer anders erreichten Verzögerung von einer Zeilenlängendauer.

Fig. 2c zeigt das Signal hinter dem Bandpaß 17.

Fig. 2d zeigt das im Rauschen verbesserte Luminanzausgangssignal der Addierstufe 16, das sich aus der Summe des laufzeitkorrigierten Signales aus Fig. 2a und eines Teiles des signals gemäß Fig. 2c ergibt. Die Menge des addierten Signals wird mit dem Regler 18 so dimensioniert, daß sich ein deutliches Edge-Noise-Minimum auf dem Bildschirm ergibt. (Dies kann beispielweise anhand eines Philips-Colour-Test-Pattern-Prüfsignales geschehen, das vorher aufgezeichnet wurde.)

Wären bei der soweit beschriebenen Schaltung der verzögerte und der unverzögerte Kanal von gleicher Bandbreite, so würden sich die Videosignalamplituden im gesamten Frequenzbereich von 0 bis 3 MHz (z.B. bei einem Multiburstsignal) verdoppeln, während die nichtkorrelierten Rauschanteile ihre Amplitude beibehielten. Der Störabstandsgewinn wäre dann theoretisch—6 dB. Leider sind für das Videosignal die Kanäle aber nicht von gleicher Bandbreite, so daß sich nur die niedrigen Frequenzanteile bis 1,5 MHz verdoppeln und die höheren Frequenzen allein aus dem Hauptkanal des ersten FM-Demodulators 8 kommen. Ein schlechter Frequenzgang des Videorecorders würde hierdurch sehr deutlich werden. Außerdem wäre der Störabstandsgewinn kleiner als—6 dB wegen der unterschiedlichen Kanalbandbreiten. Der größte Nachteil bei der Mittelung zweier Luminanzsignal-Zeilen läge aber in der Mittelung tiefer Vertikalsignalfrequenzen. Bei einem Gittertestbild, bei dem die horizontalen Gitterlinien nur eine Zeilenbreite aufweisen, würde beispielsweise nach der Mittelung eine zwei Zeilen breite Gitterlinie mit halber Signalamplitude entstehen, so daß die vertikalen und horizontalen Gitterlinien unterschiedliche Helligkeit hätten. Dies würde nur schwerlich abzeptiert werden können. Andererseits könnte man im Bereich senkrechter Kanten sehr wohl eine Verbesserung der Kantenstruktur und damit auch der Edge-Noise-Reduzierung durch Kammfilterung erreichen. Mit dem Bandpaß 17 werden nun aus dem verzögerten, demodulierten und schmalbandigen Videosignal im Bereich von ca. 500 kHz bis 2 MHz Signalanteile herausgefiltert und so zeitrichtig und entzerrt zum breitbandigen Videosignal des unverzögerten Luminanzkanals in einer solchen Amplitude addiert, daß sich ein Ausgangsluminanzsignal ergibt, das minimiertes Edge-Noise und scharfe Schwarz-Weiß- und Weiß-Schwarz-Übergänge aufweist. Der gesamte Signal-Rausch-Störabstand wird zwar nur noch um ca—1 dB verbessert, weil die Kammfilterung in nur einem Teilbereich des Videosignals erfolgt; die Edge-Noise-Störung oder auch Kantenunruhe hingegen wird deutlich sichtbar verbessert. Wegen der durch die Mittelung entstandenen Amplitudenanhebung im Bereich 700 kHz bis 2 MHz entsteht eine leichte, aber gewollte Konturanhebung im Videosignal, die einen schärferen Bildeindruck vermittelt bei gleichzeitig ruhiger wirkendem Bild. Vorteilhaft ist, daß eine preisgünstige Schaltungsverwirklichung durch Doppelausnutzung der Dropoutverzögerungsleitung möglich wird. Macht man die Amplitude des verzögerten Kanals bei der Kammfiltermittelung in gewissen Grenzen von außen regelbar, so kann die Schaltung auch noch die Funktion einer Bildschärfeeinstellung übernehmen. Der Durchlaßbereich des Bandpasses 17 ist so gewählt, daß auch Störungen durch die FM-Tonträger deutlich reduziert werden (1,6 MHz und 1,8 MHz). Da diese Träger nicht korreliert sind, wird ihre Sichtbarkeit im Bild stark herabgesetzt. Das FM-Signal kann auf die 1-H-Verzögerungsleitung 9 gegeben werden. Es könnte aber auch ein AM-moduliertes Videosignal genommen werden Außerdem muß nicht eine schmalbandige Ultraschalleitung genommen werden, es kann auch z.B. eine breitbandige andere Verzögerungsleitung oder Schaltung (CCD) zur Realisierung des Kammfilters Verwendung finden.

Von den Standard-PAL-Decodern ist die Kammfilterschaltung mit Ultraschallverzögerungsleitung bekannt. Man kann durch die Mittelung zweier Farb-Zeilensignale den Störabstand um—6 dB verbessern, wenn die Bandbreiten des unverzögerten und des verzögerten Signales gleich groß sind. Für die Bandbreite der Farbsignale mit ca+1 MHz reicht die Bandbreite der Ultraschallverzögerungsleitung 9 gerade aus. Für die Übertragung der FM-Luminanzsignale von VHS-Recordern reicht sie jedoch nicht aus, d.h. das demodulierte Luminanzsignal aus dem verzögerten Kanal ist bandbreitenbegrenzt.

**Patentansprüche**

1. Schaltung zur Verringerung des Rauschens bei der Wiedergabe eines durch Frequenzmodulation eines Bildträgers aufgezeichneten Videosignals, bei der der Bildträger einem ersten Demodulator (8) und über eine Zeilenverzögerungsleitung (9) einem zweiten Demodulator (10) zugeführt wird und die Ausgangsspannungen der
beiden Demodulatoren (8, 10) an Eingänge einer
Addierstufe (16) angelegt sind, deren Ausgangsspannung als Videosignal für die Wiedergabe
verwendet wird, dadurch gekennzeichnet, daß
zwischen dem Ausgang des zweiten Demodulators (10) und dem Eingang der Addierstufe (16)
ein Bandpaß (17) mit einem Durchlaßbereich von
etwa 0,5 bis 2 MHz liegt.

2. Schaltung nach Anspruch 1, dadurch gekennzeichnet, daß der durchgelassene Bereich die FM-
HiFi Tonsignale einschließt.

3. Schaltung nach Anspruch 1 oder 2, dadurch
gekennzeichnet, daß in einem oder in den beiden
Signalwegen vor der Übertragung ein Laufzeitausgleich vorgesehen ist.

4. Schaltung nach Anspruch 1, dadurch gekennzeichnet, daß in einem oder in beiden Signalwegen eine Amplitudeneinstellung vorgesehen ist.

5. Schaltung nach Anspruch 1, dadurch gekennzeichnet, daß der erste Eingang der Addierstufe
(16) mit einem Umschalter (13) verbunden ist, der
diesen ersten Eingang entweder mit dem Ausgang des ersten Demodulators (8) oder mit einem
Ausgang des zweiten Demodulators (10) verbindet und der Umschalter von einem Drop-out-
Detektor (19) so gesteuert wird, daß der Umschalter (13) die Addierstufe (16) mit dem zweiten
Demodulator (10) verbindet, wenn das Luminanzsignal gestört ist.

**Revendications**

1. Circuit pour diminuer le bruit lors de la
reproduction d'un signal vidéo enregistré par
modulation de fréquence d'une porteuse image,
la porteuse image étant amenée à un premier
démodulateur (8) et, par l'intermédiaire d'une
conduite de retard de ligne (9) à un second
démodualteur (10) et les tensions de sortie des
deux démodulateurs (8, 10) étant appliquées aux
entrées d'un étage addeur (16) dont la tension de
sortie est utilisée comme signal vidéo pour la
reproduction, caractérisé en ce qu'un passebande
(17) avec une bande de transmission d'environ
0,5 à 2 MHz se trouve entre la sortie du second
démodulateur (10) et l'entrée de l'étage addeur
(16).

2. Circuit selon la revendication 1, caractérisé
en ce que la zone de transmission comprend les
signaux audio Hi-Fi à modulation de fréquence.

3. Circuit selon la revendication 1 ou 2, caractérisé en ce qu'une compensation de retard est
prévue dans l'un ou dans les deux chemins de
signaux avant la transmission.

4. Circuit selon la revendication 1, caractérisé
en ce qu'un réglage d'amplitude est prévu dans
l'un ou dans les deux chemins de signaux.

5. Circuit selon la revendication 1, caractérisé
en ce que la première entrée de l'étage addeur
(16) est reliée à un commutateur qui relie cette
première entrée soit à la sortie du premier démodulateur (8), soit à la sortie du second démodulateur (10) et que le commutateur est commandé
par un détecteur de pertes d'information (19) de
manière telle que le commutateur (13) relie
l'étage addeur (16) au second démodulateur (10)
lorsque le signal de luminance est perturbé.

**Claims**

1. A circuit for reducing the noise during playback of a video signal recorded by frequency
modulation of a picture carrier, in which the
picture carrier is supplied to a first demodulator
(8) and via a line delay line (9) to a second
demodulator (10) and the output voltages of the
two demodulators (8, 10) are applied to inputs of
an adding stage (16), the output voltage of which
is used as a video signal for playback, characterised in that between the output of the second
demodulator (10) and the input of the adding
stage (16) there is a band pass filter (17) with a
pass band of about 0.5 to 2 MHz.

2. A circuit according to claim 1, characterised
in that the pass band includes the FM Hifi sound
signals.

3. A circuit according to claim 1 or 2, characterised in that an equalisation of the propagation
time is provided in one or in both signal paths
before transmission.

4. A circuit according to claim 1, characterised
in that an amplitude adjustment is provided in
one or in both signal paths.

5. A circuit according to claim 1, characterised
in that the first input of the adding stage (16) is
connected to a switch (13), which connects this
first input either to the output of the first demodulator (8) or to an output of the second demodulator (10) and the switch is controlled by a drop
out detector (19) so that the switch (13) connects
the adding stage (16) to the second demodulator
(10), if the luminance signal has interference.

Fig.1

Fig.2a

Fig.2b

Fig.2c

Fig.2d